# EUROPÄISCHE PATENTSCHRIFT

(11) **EP 0 902 721 B1**
(45) Veröffentlichungstag und Bekanntmachung des Hinweises auf die Patenterteilung: **29.08.2001**
(21) Anmeldenummer: 97923749.2
(22) Anmeldetag: 23.04.1997
(51) Int. Cl.: B01D 53/32, F01N 3/08, B01J 19/08, B01D 53/94

(54) **VORRICHTUNG ZUR NACHBEHANDLUNG VON ABGAS DURCH KOMBINATION VON GASENTLADUNG UND KATALYSATOR**
DEVICE FOR AFTERTREATMENT OF WASTE GAS THROUGH A COMBINATION OF GAS DISCHARGE AND CATALYST
DISPOSITIF POUR LE TRAITEMENT ULTERIEUR D'EFFLUENTS GAZEUX PAR L'ASSOCIATION D'UNE DECHARGE GAZEUSE ET D'UN CATALYSEUR

(30) Priorität: 23.04.1996 DE 19616206
(43) Veröffentlichungstag der Anmeldung: 24.03.1999
(73) Patentinhaber: FRAUNHOFER-GESELLSCHAFT ZUR FÖRDERUNG DER ANGEWANDTEN FORSCHUNG E.V., 80636 München (DE); FEV Motorentechnik GmbH & Co. KG, D-52078 Aachen (DE)
(72) Erfinder: LEPPERHOFF, Gerhard, D-52223 Stolberg (DE); LÜTKEMEYER, Georg, D-52146 Würselen (DE); NEFF, Willi, B-4721 Kelmis (BE); POCHNER, Klaus, D-52072 Aachen (DE)
(74) Vertreter: Olgemöller, Luitgard, Dr.
(86) Internationale Anmeldenummer: DE9700813
(87) Internationale Veröffentlichungsnummer: WO9739822

(56) Entgegenhaltungen:
- EP-A- 0 639 401
- EP-A- 0 659 465
- DE-A- 3 731 168
- DE-A- 4 317 964
- DE-A- 4 416 676
- FR-A- 2 668 387

## Beschreibung

Zur plasmachemischen Umsetzung in Gasen wird unmittelbar im strömenden Gas eine Barrierenentladung erzeugt, was seit über hundert Jahren Stand der Technik, beispielsweise bei der Ozonerzeugung, ist. Dieser Entladungstyp ermöglicht auch im Druckbereich von etwa einer Atmosphäre die Erzeugung eines thermischen Nichtgleichgewichtszustandes, der für die Effizienz der plasmachemischen Umsetzung von Bedeutung ist. Das Entladungsgefäß, im folgenden Reaktor genannt, besteht aus einem schmalen Spalt, in dem die Entladung gezündet wird, und zwei flächigen Elektroden, die den Spalt begrenzen. Der Spalt kann seitlich abgeschlossen sein, oder die Elektroden werden zu einem koaxialen Gefäß aufgerollt. Wichtig ist, daß wenigstens eine der Elektroden auf der dem Entladungsgas zugewandten Seite von einer dielektrischen Barriere bedeckt ist, die namensgebend für die Entladung ist.

Bei jedem Anstieg einer hochfrequenten Hochspannung entsteht im Entladungsraum ein elektrisches Feld, das zur Ausbildung von Streamerentladungen führt. Aufgrund der statistischen Natur des Zündvorganges beginnt die Entladung nicht an allen Stellen gleichzeitig. Die durch die Streamerkanäle fließende Ladung kann über das isolierende Dielektrikum nicht auf die Elektroden abfließen, und es baut sich dort eine Oberflächenladung auf, die in einer Umgebung um den Streamer das von außen angelegte Feld abschirmt. In diesem Bereich ist in der gleichen Spannungshalbwelle keine Zündung mehr möglich, so daß die Entladung aus einem Mosaik kleiner Kanäle besteht. Bei ausreichendem Abstand zwischen den Spannungshalbwellen zünden die Kanäle in der nächsten Halbwelle wiederum statistisch über die Fläche verteilt und die Entladung erscheint im zeitlichen Mittel homogen.

Üblicherweise wird zur Erzeugung einer Barrierenentladung ein glattes Elektrodensystem verwendet, um eine möglichst gleichmäßige statistische Verteilung der auch Filamente genannten, dünnen Entladungskanäle über die Elektrodenfläche zu gewährleisten. Es ist jedoch bekannt, daß die chemischen Reaktionen in Barrierenentladungen bei Atmosphärendruck nicht im ganzen Volumen homogen ablaufen, sondern nur in den Kanälen initiiert werden. Aufgrund der Zeitdauer der Einzelentladungen von wenigen Nanosekunden muß jedoch eine Nachreaktion der angeregten Moleküle erfolgen, die bis zu Millisekunden dauern kann. Eine erneute Anregung des gleichen Gasvolumens mit einer weiteren Einzelentladung während dieses Zeitbereichs kann die chemische Reaktion stören oder zumindest unnötigen Energieverbrauch hervorrufen.

Es gibt daher in der Literatur verschiedene Ansätze, dem Gas Zeit für die Nachreaktion zu geben, oder zusätzliche Folgereaktionen durch Katalysatoren hervorzurufen.

Die Koronaentladung ist eine weitere Form der nichtthermischen Gasentladung, wobei im Unterschied zur Barrierenentladung die Thermalisierung nicht durch selbsttätige zeitliche Beschränkung der Entladungsdauer, sondern durch einen eng begrenzten aktiven Entladungsbereich erreicht wird. in diesem Bereich liegt ein stark inhomogenes elektrisches Feld vor, so daß die Ladungsträger aufgrund von Diffusion den Bereich, in dem inelastische Stöße stattfinden können, verlassen, bevor Thermalisierung einsetzt. Das inhomogene Feld ausreichender Feldstärke wird durch Inhomogenitäten in Form von Spitzen und Kanten an den Elektroden erzeugt. Oft ist zusätzlich eine intermittierende externe Abschaltung der Spannungsquelle erforderlich, um die Bildung thermischer Bogenentladungen zu verhindern. In R. KUTZNER, J.G.H. SALGE: Generation of non-thermal transient gas discharges at atmospheric pressure for pollution control in: 12th Int. Symp. Plasma Chemistry; Minneapolis, 21-25 Aug. 1995 wird ein solcher Reaktor zur Entstickung von Verbrennungsabgasen beschrieben, wobei darauf Wert gelegt wird, daß in Bereichen zwischen scharfkantigen Messerelektroden dem Gas Zeit für Nachreaktionen gegeben wird. Nachteilig ist jedoch die hohe erforderliche Spannung bei diesen Systemen und die Gefahr von Kurzschlußbildung zwischen metallischen Elektroden aufgrund möglicher Ablagerungen aus dem Abgas. Zudem hat die Koronaentladung im räumlichen Mittel eine erheblich niedrigere Elektronenenergie als die zuvor beschriebene Barrierenentladung.

Bei der Erzeugung von Barrierenentladungen wurde beobachtet, daß die Einhaltung eines Entladungsspaltes von nicht verschwindender Breite für die Funktion der Entladung nicht unbedingt erforderlich ist. Aufgrund der dielektrischen Barriere kommt es nicht zu Kurzschlüssen, und die Begrenzung des Entladungsstroms durch Oberflächenladungen führt dazu, daß sich die Gasentladung um einige Millimeter über den Bereich des kürzesten Abstands hinaus ausbreitet. Dieses Phänomen wird beispielsweise bei der Reinigung von Folienbahnen auf einer umlaufenden Walze (siehe DE-OS 35 38 541) oder bei Ozonerzeugern mit besonders guter Kühlung (siehe DE-OS 37 31 168) benutzt.

Ein weiteres Verfahren zur Erzeugung räumlich bevorzugter Bereiche in einer Barrierenentladung wird in der DE-OS 195 18 970 beschrieben. Unter Vermeidung von Spitzen und Kanten, die die erreichbare mittlere Elektronenenergie mindern würden, wird durch streifenförmige Runzein auf den Elektroden eine räumliche Bevorzugung bei der Ausbildung von Entladungsfilamenten geschaffen. Ein Mitlaufen der Filamente mit dem Gasstrom wird vermieden, und es bilden sich zwischen den Anregungszonen Toträume aus, in denen Nachreaktionen des Gases stattfinden können.

Eine Weiterbildung derartiger Nachreaktionszonen sind Folgereaktionszonen, in denen als Unterschied nicht die plasmaelektrisch angeregten Moleküle abreagieren, sondern klassisch chemisch bestimmte Sekundär- und Kettenreaktionen ablaufen. Diese Folgereaktionen können durch katalytische Effekte begünstigt werden. Die DE-OS 34 14 121 und die DE-OS 44 23 397 beschreiben die Hintereinanderschaltung verschiedener Typen von Gasentladungen mit Katalysatoren. Gemeinsamer Nachteil derartiger Vorrichtungen ist, daß das nach der elektrischen Anregung reagierende Gas über vergleichsweise weite Entfernungen strömen muß, bis es die katalytisch ausgerüsteten Folgereaktionszonen erreicht.

Ein alternatives Konzept wird in der DE-OS 36 44 090 sowie in der DE-OS 36 42 472, vorgestellt. Hier wird in einem rohrförmigen Katalysator durch Anlegen einer Gleichspannung ein elektrisches Feld in radialer bzw. longitudinaler Richtung erzeugt, wobei die Zündung einer Gasentladung nach Möglichkeit vermieden wird. Grund ist, daß die hier unmittelbar in den Bereich des elektrischen Feldes eingebrachten Katalysatoren durch die Einwirkung des Plasmas zerstört würden. Die räumliche Nähe des Folgereaktionsbereichs zum Anregungsbereich ist also eher störend.

Es ist bekannt, daß bei der plasmachemischen Nachbehandlung von Abgasen eine Anregungs- und eine Nachreaktionsphase mit deutlich unterschiedlichen Zeitkonstanten stattfinden. Besonders bei der Nachreaktion kann ein katalytisches Material den Wirkungsgrad der Umsetzung deutlich verbessern. Schädlich ist dabei jedoch, daß viele Katalysatoren durch den Kontakt mit der elektrischen Entladung beschädigt oder zerstört werden.

Aufgabe der vorliegenden Erfindung ist es, diese Nachteile zu beseitigen. Diese Aufgabe wird gelöst durch eine Vorrichtung gemäß Anspruch 1, mit den bevorzugten Ausgestaltungen gemäß Anspruch 5 und 10, sowie ein Verfahren gemäß Anspruch 12. Dabei verbessert die Erfindung bekannte Vorrichtungen dadurch, daß die Anregung und die Nachreaktion in räumlich getrennten Bereichen des Reaktors stattfinden (können), die jedoch sehr eng nebeneinander liegen (z.B. im Millimeterbereich). Wird zusätzlich katalytisches Material eingesetzt, so kann trotz unmittelbarer Nähe zur Entladung ein direkter Stromfluß aus der Entladung auf den Katalysator vermieden werden.

Durch Erzeugung einer wandnahen Barrierenentladung in unmittelbarer Nähe einer auf gleichem elektrischem Potential liegenden Fläche durch die erfindungsgemäße Ausgestaltung der Nachreinigungsvorrichtung ist es gelungen, daß einerseits Anregungs-, Nachreaktions- und ggf. Folgereaktionsbereich von dem zu behandelnden Gas kurz nacheinander erreicht werden und andererseits ein Stromfluß über eine der Wände vermieden wird. Gegenstand der Erfindung ist ferner die Belegung dieser Wand mit einem katalytischen Material. Beliebige Katalysatoren nach Stand der Technik können hier eingesetzt werden, da keine Zerstörung durch Einwirkung der elektrischen Entladung stattfindet.

Im Unterschied zu bekannten Vorrichtungen erfolgt die Anordnung von Gasentladung und Katalysator nicht hintereinander, sondern im gleichen Reaktorbereich nebeneinander. Die Wege, die das Gas zurücklegen muß, sind daher der Zeitdauer der verschiedenen Reaktionstypen (Anregung, Nachreaktion) angepaßt. Es ist also ein ausreichend schneller Transport angeregter Moleküle aus der Anregungszone zur Folgereaktionszone, verursacht durch ambipolare Diffusion oder durch gerichtete Gasströmung oder durch Wirbel, möglich.

Als Katalysator eignen sich beispielsweise Edelmetall- oder Metalloxidkatalysatoren, sowie Zeolithkeramiken. Da die Katalysatoroberfläche bevorzugt nicht an der elektrischen Entladung beteiligt ist (das Material nicht vom elektrischen Strom der Gasentladung durchsetzt wird, zumindest nicht in der vornehmlich herschenden Stromrichtung), ist es unerheblich, ob es sich um einen elektrischen Isolator oder einen Leiter handelt. Zudem kann die Oberfläche des Katalysators beliebig gestaltet werden, ohne den Feldverlauf in der Anregungszone zu beeinflussen. Als wesentlicher Vorteil gegenüber der Beschichtung glatter Elektrodenflächen (die natürlich ebenfalls möglich ist) ergibt sich daraus die Möglichkeit, auch rauhe oder poröse Trägermaterialien zu verwenden und damit erstmals Katalysatoren von ausreichend großer Oberfläche im Bereich einer Gasentladung einzusetzen.

Bisher war die Einstellung der richtigen Betriebstemperatur von Katalysatoren beispielsweise kurz nach dem Kaltstart eines Motors oder bei Vollastbetrieb kritisch für den Katalysatorwirkungsgrad einerseits und die Lebensdauer andererseits.

Es gibt für die Kaltstartphase widerstands- oder brennerbeheizte Katalysatoren, bei denen jedoch viel kostbare Energie im Kampf gegen die Wärmekapazität aufgewendet werden muß. Die erfindungsgemäße Vorrichtung ermöglicht, mittels einer Gasentladung Reaktionen im Abgas zu stimulieren und gleichzeitig die Abwärme der Gasentladung zur Beheizung des Katalysators zu nutzen. Vorteilhaft sind hierfür Anordnungen, wo die elektrische Entladung hauptsächlich im Einströmbereich des Katalysators erzeugt wird, um den Wärmetransport in Stömungsrichtung des Abgases zu nutzen, oder wo ein koaxiales System die Gasentladung um den Katalysator herum ausbildet. Der Katalysator ist damit zur Umgebung hin einerseits quasi gegen Wärmeabstrahlung isoliert und andererseits wird aus allen Richtungen mittels der Entladung Wärme zugeführt.

Ist während der Aufheizphase eine gute Wärmezufuhr und die Vermeidung von Abstrahlverlusten nach außen vorteilhaft, so können jedoch bei hoher Motorlast Abgastemperaturen von über 400-600 °C zu einer Schädigung des Katalysators führen. Werden derartige hitzeempfindliche Katalysatormaterialien eingesetzt, so ist eine Anordnung zu bevorzugen, wo der Katalysator auf der äußeren Wand eines im Auspufftopf untergebrachten Koaxialreaktors sitzt und durch den Fahrtwind eine gewisse Kühlung erfolgen kann. Der schlechtere Wirkungsgrad eines solchen Katalysators nach dem Kaltstart kann durch Erhöhung der elektrischen Leistung in der Gasentladung über die im Dauerbetrieb eingesetzte Leistung kompensiert werden. Neben der schnelleren Aufheizung aufgrund ihrer Abwärme bewirkt die Gasentladung an sich bereits eine Umsetzung von Schadstoffen, so daß die hohen Emissionspeaks in der Aufheizphase, die zu einem erheblichen Anteil zur Summe der Emissionen im gesamten Testzyklus beitragen, gesenkt werden.

Die plasmachemische Umsetzung in der Gasphase eröffnet die Möglichkeit, Reaktionen, die im thermodynamischen Gleichgewicht eher langsam oder gleichzeitig mit störenden Nebenreaktionen ablaufen, effektiver durchzuführen. Ein wichtiges Anwendungsbeispiel ist die Nachbehandlung von Abgasen aus Verbrennungsmotoren mit dem Ziel, Stickoxide oder Kohlenwasserstoffe zu vermindern. Insbesondere der Einsatz im Kraftfahrzeug erfordert robuste, kompakte und vor allem effiziente Reaktoren, um nur einen möglichst geringen Teil der vom Motor erzeugten Energie für die elektrische Nachbehandlung des Abgases aufwenden zu müssen.

Die Erfindung kann auch bei der Nachbehandlung von Abgasen aus Bahnantrieben, Stationärmotoren oder Kraftwerken, sowie von toxischen Industrieabgasen eingesetzt werden. Daneben sind auch Synthesereaktionen in der chemischen Industrie unter Zuhilfenahme der erfindungsgemäßen Vorrichtung denkbar.

Anhand der beigefügten Zeichungen wird der Aufbau der erfindungsgemäßen Vorrichtung näher und beispielhaft erläutert, wobei selbstverständlich auch andere geometrische Anordnungen als die hier beschriebenen möglich sind.

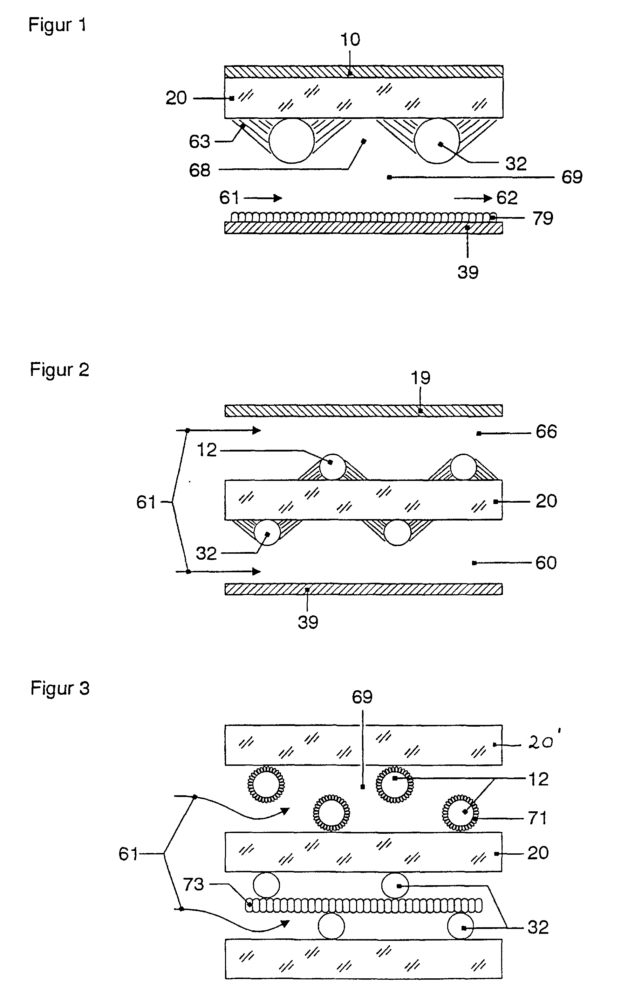

**Figur 1** zeigt einen unmaßstäblichen Schnitt durch einen Teilbereich einer Entladungsvorrichtung, der senkrecht zur Zeichenebene noch weiter ausgedehnt ist, mit einer ersten Elektrode 10, einer dielektrischen Barriere 20, einer Gegenelektrode 32, einem Anregungsbereich 63, einem Nachreaktionsbereich 68, einem Totraum 69, einer Wand 39 und darauf befindlichem Katalysator 79. In Strömungsrichtung 61,62 des Gases kann der Bereich selbstverständlich ebenfalls weiter ausgedehnt sein.

Die Ausgestaltungen wie schematisch in Figur 1 dargestellt, sollen nachstehend weiter erläutert werden:

Die Erzeugung einer Barrierenentladung einschließlich des hier beschriebenen Spezialfalls einer dielektrischen Oberflächenentladung erfordert zwingend wenigstens eine (namensgebende) dielektrische Barriere (20). Diese ist üblicherweise ein hochspannungsfester elektrischer Isolator, z.B. Glas oder Keramik. Die dielektrische Barriere stellt eine Begrenzung des Reaktorraumes dar, der in Längsrichtung von einer Einströmseite (61) zu einer Ausströmseite (62) von dem zu behandelnden Gas durchströmt wird. Auf der dem Reaktorraum, also dem Gas abgewandten Seite des Dielektrikums (20) befindet sich eine flächige erste Elektrode (10), die ein undurchbrochenes oder ein durchbrochenes Flächengebilde sein kann. Sie kann z.B. durch eine leitfähige Beschichtung, eine aufmontierte Folie oder ein feinmaschiges Gewebe gebildet werden. Alternativ kann die mechanisch tragende Struktur von dieser dann vorzugsweise massiv metallischen (z.B. Blechrohr) Elektrode (10) gebildet werden und das Dielektrikum (20) durch Beschichtung der Elektrode hergestellt werden.

Die Gegenelektrode (32), die mit dem anderen Pol der nicht dargestellten Spannungsquelle verbunden wird, befindet sich auf der dem Reaktorraum und damit dem Gas zugewandten Seite des Dielektrikums (20) und zwar sehr nahe bei diesem. Sie ist als durchbrochenes Flächengebilde ausgebildet, wobei Teile dieses Gebildes Dielektrikum anbringen können. Diese Bezeichnung soll ausdrücken, daß sie freien Raum zwischen elektrodischen Strukturen besitzen muß. So kann es sich um ein Gitter, um parallele oder (nicht notwendigerweise senkrecht) gekreuzte Stäbe, um ein Netz, Gewebe, Gelege, Gewirke, Geflecht oder dgl. aus leitendem Material handeln, z.B. aus Draht oder dgl. Vorzugsweise besteht sie aus runden oder abgerundeten Stäben, Drähten oder aus grobmaschigem Drahtnetz. In der Figur soll mit 32 ein Schnitt durch einzelne Draht- oder Stabelemente angedeutet werden. Der Durchmesser eines solchen Elementes liegt bevorzugt im Bereich von etwa 0.5 - 3 mm, besonders bevorzugt im Bereich von etwa 0.8 bis 2 mm. Das Netz oder die ggf. andere Struktur kann z.B. eine lichte Maschenweite von 1 bis 4 mm aufweisen. Selbstverständlich sind auch Werte darunter oder darüber möglich. Das Flächengebilde kann auch ein Streckgitter sein, also ein halbversetzt geschlitztes Blech, wobei sich das Blech im Bereich der Schlitze durch Strecken aufstellt. Die erste Elektrode (10) kann wie die zweite Elektrode ein Drahtnetz sein. In diesem Fall ist das erste Drahtnetz vorzugsweise so engmaschig zu gestalten, daß der Verlauf des elektrischen Feldes auf der dem Gas zugewandten Seite des Dielektrikums (20) nicht von den Maschen des ersten Drahtnetzes (10) gestört wird.

Bei Anlegen einer Wechselspannung an das beschriebene System kommt es im Spaltbereich zwischen den Strukturen der zweiten Elektrode (32) und dem Dielektrikum (20) zur Ausbildung einer Gasentladung (63). Die Gasentladung wird also vornehmlich nahe der Oberfläche des Dielektrikums erzeugt. Das vorbeiströmende Gas (61) wird hinter den Drähten (32) oder dergleichen verwirbelt und tritt kurzzeitig in den Anregungsbereich (63) ein. Unmittelbar danach wirbelt das Gas in den nebenliegenden Nachreaktionsbereich (68), wo die plasmainduzierte Reaktion Zeit zum weitgehenden Ablaufen erhält. Bei Experimenten wurde beobachtet, daß der im wesentlichen keilförmige Spalt unter stabförmigen Elektroden, die ja im (meist kohlenwasserstoff- und partikelhaltigen) Abgasstrom liegen, bei eingeschalteter Entladung in kurzer Zeit von Ablagerungen "freigebrannt" wird, so daß keine Degradation des Elektrodensystems durch Verschmutzungen auftritt.

Die zweite Begrenzung des Entladungsraumes kann durch eine Wand (39) gebildet werden, die mit dem gleichen Pol der Spannungsquelle verbunden werden kann wie die innenliegende, also zweite Elektrode (32). Diese Schaltungsanordnung ist jedoch fakultativ, da die Wand keine Elektrodenfunktion ausüben muß. Zwischen Wand und Elektrode (32) wird sich folglich keine Entladung ausbilden, und es wird kein wesentlicher Stromfluß über die Wand (39) erfolgen. Aufgrund des empfehlenswerterweise deutlich größeren Abstandes der Wand (39) zum Dielektrikum (20) und der ersten Elektrode (10), verglichen mit dem Abstand der Strukturen der zweiten Elektrode (32) hierzu, wird sich auch zwischen Dielektrikum (20) und Wand (39) keine Gasentladung bilden, und der Nachreaktionsbereich (68) bleibt tatsächlich unbeeinflußt. Durch geeignetes Bemessen des Totraums (69) zwischen der Elektrode (32) und der Wand (39) kann gleichzeitig erreicht werden, daß praktisch kein Gas unbehandelt durch den Reaktor strömt. Wenn beispielsweise die Drähte der zweiten Elektrode (32) einen Durchmesser von etwa 1 bis 2 mm aufweisen, steigt die Effizienz der Behandlung bei einer Verringerung des Abstands zwischen dem Dielektrikum (20) und der Wand (39) bzw. deren Katalysatorauflage (79) von etwa 6 mm auf etwa 2,5 bis 3,5 mm deutlich an. Sehr gute Werte erhält man für einen Abstand zwischen Dielektrikum und Wand (oder Katalysatorauflage) von etwa 3 bis 3,5 mm bei einer Dicke der Elektrodendrähte (32) von etwa 2 mm.

Eine besonders vorteilhafte Weiterbildung der Erfindung ergibt sich, wenn die Wand (39) mit einem Katalysator (79) beschichtet oder durch den Katalysator selbst gebildet wird. Der Totraum (69) kann nunmehr als Folgereaktionszone dienen, wo vornehmlich katalytisch ausgelöste Reaktionen ablaufen. Selbstverständlich ist es auch möglich, daß der katalytisch (79) oder elektrisch (10 bzw. 32) aktive Bereich der jeweiligen "Wände" in Strömungsrichtung 61,62 unterschiedlich lang sind, oder daß die beidseitigen "Wände" auf jeweils einem Teil ihrer Länge katalytisch und elektrisch aktive Bereiche tragen.

**Figur 2** zeigt eine alternative Ausführungsform des beschriebenen Reaktors, bei der sich zur Erhöhung des möglichen Gasdurchsatzes hinter dem Dielektrikum 20 ein weiterer Gasentladungsraum befindet, so daß zwei Gasentladungsräume 60, 66 vorhanden sind. Der Aufbau des zweiten Gasentladungsraums ist analog dem oben beschriebenen (ersten) Gasentladungsraum und umfaßt eine durchbrochene Elektrode, z.B. Drahtelektrode 12, und eine fakultativ auf gleichem Potential liegende Wand 19. Die jeweils mit einem Pol der (nicht gezeigten) Spannungsquelle verbundenen Elektroden 12,32 können als einander gegenüber oder, wie dargestellt, zueinander versetzt liegende Stäbe, als gekreuzte Stäbe oder jeweils als Drahtnetz ausgeführt werden. Auch alle anderen oben erwähnten Eletrodenstrukturen sind selbstverständlich möglich. Die Richtung der Gasströme (61) durch beide Räume wird üblicherweise parallel sein, kann aber auch gegenläufig sein (nicht dargestellt).

Eine weitere Vergrößerung des Reaktionsraumes ist möglich, wenn die Rückseite der Wand (39) des ersten Reaktionsraumes (60) mit der Wand (19) des zweiten Reaktionsraumes (66) quasi zusammenfällt, und sich dahinter weitere Reaktionsräume anschließen. Es ist dabei nicht notwendig, daß diese Wand gasdicht ist und so kann diese auch völlig entfallen. **Figur 3** zeigt die sich ergebende Elektrodenstruktur, die vorzugsweise im wesentlichen nur noch aus dicht aufeinanderliegenden Schichten aus Drähten 12,32 (oder jeder anderen oben für die zweite Elektrode beschriebenen Elektrodenstruktur) und Dielektrika 20 besteht.

Die Anzahl der Schichten ist nicht beschränkt. Abwechselnde Drahtschichten oder ähnliches (12 bzw. 32)werden jeweils mit unterschiedlichen Polen der Spannungsquelle verbunden. Zweckmäßig ist dabei, wie dargestellt die Elektroden durch offenes Gewebe oder Geflecht, bevorzugt aus Draht, zu bilden, damit ausreichend offener Raum (69) für die Gasströmung (61) verbleibt. Eine eventuelle katalytische Beschichtung kann, wie in der oberen Bildhälfte der Figur 3 dargestellt, teil- oder ganzflächig auf den Drähten aufgebracht werden (71), wobei eine mögliche Zerstörung durch Einwirkung der Gasentladung an der Kontaktfläche mit dem Dielektrikum in Kauf genommen wird. Alternativ kann im Drahtnetz eine katalytische Zwischenlage (73) eingebracht werden, die in Figur 3 in der unteren Bildhälfte gezeigt ist und, ebenso wie die Beschichtung 79 wie in Figur 1 gezeigt, durch die abschirmende Wirkung der Elektroden aus Drähten oder dergleichen (32) vor der Entladung geschützt ist.

Die sich ergebende flächige Anordnung aller dargestellten und beschriebenen Ausgestaltungen kann eben ausgebildet oder zu einem Koaxialsystem aufgerollt werden.

### Liste der Bezugszeichen

- 10: erste oder Hochspannungselektrode
- 12: Schematische Darstellung einer zweiten Elektrode, als Schnitt durch einen leitenden Stab oder Draht gezeichnet
- 19: Reaktorwand, ggf. auf gleichem elektrischen Potential wie Elektrode 12
- 20, 20': ' Dielektrikum
- 32: durchbrochene Flächenelektrode, z.B. Draht- oder Netzelektrode
- 39: Reaktorwand, ggf. auf gleichem elektrischem Potential wie Elektrode 32
- 60: Gasentladungsraum
- 61: Einströmseite
- 62: Ausströmseite
- 63: Oberflächenentladung
- 66: weiterer Gasentladungsraum
- 68: Verwirbelungszone (Nachreaktionsbereich)
- 69: Totraum (ohne Gasentladung)
- 71: Katalysatormaterial
- 73: katalytisches Material
- 79: Katalysatormaterial

## Patentansprüche

1. Vorrichtung zum Nachbehandeln von Abgas, umfassend
- mindestens einen ersten Reaktorraum, der in Längsrichtung von einer Einströmseite (61) zu einer Ausströmseite (62) von zu behandelndem Gas durchströmbar ist,
- eine erste Elektrode (10,12),
- ein flächiges Dielektrikum (20), das den ersten Reaktorraum von der ersten Elektrode (10,12) abschirmt und nahe oder auf dieser angebracht ist (oder vice versa),
- eine zweite Elektrode (32), die nahe dem Dielektrikum angeordnet ist, wobei sie sich auf der dem ersten Reaktorraum und damit dem Gas zugewandten Seite des Dielektrikums befindet, und die als durchbrochenes Flächengebilde ausgebildet und gegen die erste Elektrode (10,12) schaltbar ist.

2. Vorrichtung nach Anspruch 1, **dadurch gekennzeichnet**, daß die Elektrode 10 ein massives Flächengebilde ist.

3. Vorrichtung nach Anspruch 1 oder 2, worin der Reaktorraum weiterhin von einer dem Dielektrikum gegenüberliegenden Wand (39) begrenzt wird, die mit der zweiten Elektrode zusammenschaltbar ist.

4. Vorrichtung nach Anspruch 3, worin auf der Wand (39) und/oder auf der zweiten Elektrode (32) Katalysatormaterial (71,79) aufgebracht ist, und/oder worin die Wand (39) aus Katalysatormaterial besteht.

5. Vorrichtung nach Anspruch 1, umfassend
- einen ersten und einen zweiten Reaktorraum (60,66), die in Längsrichtung von einer Einströmseite (61) zu einer Ausströmseite (62) von zu behandelndem Gas durchströmbar sind,
- eine erste, als durchbrochenes Flächengebilde ausgebildete Elektrode (12), die im zweiten Reaktorraum (66) angeordnet ist,
- eine zweite, durchbrochene Elektrode (32), die im ersten Reaktorraum (60) angeordnet ist,
- ein flächiges Dielektrikum (20), das die beiden Elektrodenräume voneinander trennt.

6. Vorrichtung nach Anspruch 5, worin die beiden Reaktorräume (66,60) jeweils dem Dielektrikum gegenüberliegende Wände (19,39) aufweisen und von diesen begrenzt werden, wobei sich auf einer oder beiden dieser Wände und/oder auf einer oder beiden der Elektroden (12,32) Katalysatormaterial (71,79) befindet, oder worin eine oder beide dieser Wände aus Katalysatormaterial besteht/bestehen.

7. Vorrichtung nach Anspruch 6, worin die Wände (19,39) mit Katalysatormaterial (79) beschichtet sind.

8. Vorrichtung nach Anspruch 1, umfassend mindestens zwei Reaktorräume, die in Längsrichtung von einer Einströmseite (61) zu einer Ausströmseite (62) von zu behandelndem Gas durchströmbar und jeweils durch Dielektrika (20,20',20" ...) voneinander getrennt sind, wobei jeder Reaktorraum in Folge abwechselnd eine erste (12) oder eine zweite (32) als durchbrochenes Flächengebilde ausgebildete Elektrode aufweist und der Abstand zwischen zwei Dielektrika (20,20') so gewählt ist, daß sich Strukturteile der ersten bzw. der zweiten Elektrode jeweils sowohl nahe dem ersten (20) als auch nahe dem zweiten (20') Dielektrikum befinden.

9. Vorrichtung nach Anspruch 8, worin auf den Elektrodenoberflächen (12,32) oder in Freiräumen der Elektroden Katalysatormaterial (71,73) angeordnet ist.

10. Vorrichtung nach einem der Ansprüche 5 bis 9, worin die Elektroden aus Stäben oder Drähten und/oder gitter- oder netzförmig oder als Gewebe oder Geflecht ausgebildet sind.

11. Vorrichtung nach einem der Ansprüche 5 bis 10, worin das Katalysatormaterial (71,73) auf der Elektrodenoberfläche aufgebracht ist und/oder als Zwischenlage in die Elektrodenstruktur eingebettet ist.

12. Verfahren zum Nachbehandeln von Abgas, worin das Gas einer elektrischen Barrierenentladung unterworfen wird und dabei in ein- und demselben Reaktionsraum erst einen Anregungsbereich (63) und kurz danach einen Nachreaktionsbereich (68) durchläuft, **dadurch gekennzeichnet**, daß
- das Gas durch mindestens einen ersten Reaktorraum in Längsrichtung von einer Einströmseite (61) zu einer Ausströmseite (62) von zu behandelndem Gas strömt, wobei
- eine erste Elektrode (10,12), sowie
- ein flächiges Dielektrikum (20) vorgesehen ist, das den ersten Reaktorraum von der ersten Elektrode (10,12) abschirmt und nahe oder auf dieser angebracht ist (oder vice versa), und
- eine zweite Elektrode (32), die nahe dem Dielektrikum angeordnet ist, wobei sie sich auf der dem ersten Reaktorraum und damit dem Gas zugewandten Seite des Dielektrikums befindet, und die als durchbrochenes Flächengebilde ausgebildet und gegen die erste Elektrode (10,12) schaltbar ist.

13. Verfahren nach Anspruch 12, worin das Gas im Nachreaktionsbereich durch Katalysatormaterial katalysierte Folgereaktionen eingeht.

14. Verfahren nach Anspruch 12 oder 13, worin das Gas nach dem Nachreaktionsbereich (68) einen Folgereaktionsbereich (69) durchläuft, in welchem es durch Katalysatormaterial bewirkten, klassisch chemischen Reaktionen unterworfen wird, wobei der Folgereaktionsbereich (69) in Hauptströmungsrichtung des Gases (61,62) gesehen neben dem Nachreaktionsbereich (68) angeordnet ist.

## Claims

1. Device for after-treatment of waste gas comprising
- at least one first reactor chamber, through which gas to be treated can flow in longitudinal direction from an inflow side (61) to an outflow side (62),
- a first electrode (10, 12),
- a laminar dielectric (20), which screens the first reactor chamber from the first electrode (10, 12) and is attached near or on the latter (or vice versa),
- a second electrode (32), which is arranged near the dielectric, wherein it is situated on the side of the dielectric facing the first reactor chamber and hence the gas, and is designed as an open-work laminar structure and can be connected opposite the first electrode (10,12).

2. Device according to claim 1, **characterised in that** the electrode 10 is a solid laminar structure.

3. Device according to claim 1 or 2, wherein the reactor chamber is also limited by a wall (39) opposite the dielectric which can be interconnected with the second electrode.

4. Device according to claim 3, wherein catalyst material (71, 79) is applied to the wall (39) and/or to the second electrode (32), and/or wherein the wall (39) consists of catalyst material.

5. Device according to claim 1 comprising
- a first and a second reactor chamber (60, 66), through which gas to be treated can flow in longitudinal direction from an inflow side (61) to an outflow side (62),
- a first electrode (12) designed as an open-work laminar structure, and which is arranged in the second reactor chamber (66),
- a second open-work electrode (32), which is arranged in the first reactor chamber (60),
- a laminar dielectric (20), which separates the two electrode chambers from one another.

6. Device according to claim 5, wherein the two reactor chambers (66, 60) have in each case walls (19, 39) opposite the dielectric and are limited by them, wherein catalyst material (71, 79) is situated on one or both of these walls and/or on one or both of the electrodes (12, 32), or wherein one or both of these walls consist(s) of catalyst material.

7. Device according to claim 6, wherein the walls (19, 39) are coated with catalyst material (79).

8. Device according to claim 1 comprising at least two reactor chambers, through which gas to be treated can flow in longitudinal direction from an inflow side (61) to an outflow side (62) and in each case are separated from one another by dielectrics (20, 20', 20" ...), wherein each reactor chamber has in sequence alternately a first (12) or a second (32) electrode designed as an open-work laminar structure and the distance between two dielectrics (20, 20') is selected so that structural parts of the first or the second electrode are situated in each case both near the first (20) and near the second (20') dielectric.

9. Device according to claim 8, wherein catalyst material (71, 73) is arranged on the electrode surfaces (12, 32) or in gaps in the electrodes.

10. Device according to one of claims 5 to 9, wherein the electrodes are made from rods or wires and/or are designed like latticework or network or as fabric or mesh.

11. Device according to one of claims 5 to 10, wherein the catalyst material (71, 73) is applied to the electrode surface and/or is embedded in the electrode structure as an intermediate layer.

12. Process for after-treatment of waste gas, wherein the gas is subjected to electric barrier discharge and thus in one and the same reactor chamber, firstly passes through an excitation region (63) and shortly thereafter an after-reaction region (68), **characterised in that**
- the gas flows through at least one first reactor chamber in longitudinal direction from an inflow side (61) to an outflow side (62) by gas to be treated, wherein
- a first electrode (10, 12), and
- a laminar dielectric (20) is provided, which screens the first reactor chamber from the first electrode (10, 12) and is attached near or on the latter (or vice versa), and
- a second electrode (32), which is arranged near the dielectric, wherein it is situated on the side of the dielectric facing the first reactor chamber and hence the gas, and is designed as an open-work laminar structure and can be connected opposite the first electrode (10, 12).

13. Process according to claim 12, wherein the gas in the after-reaction region enters secondary reactions catalysed by catalyst material.

14. Process according to claim 12 or 13, wherein downstream of the after-reaction region (68) the gas flows through a secondary reaction region (69), in which it is subjected to classic chemical reactions effected by catalyst material, wherein the secondary reaction region (69) is arranged next to the after-reaction region (68) seen in the main flow direction of the gas (61, 62).

## Revendications

1. Dispositif pour le traitement ultérieur d'effluents gazeux, comprenant
- au moins une première chambre de réacteur qui peut être traversée dans le sens de la longueur par un gaz à traiter allant d'un côté d'admission (61) à un côté d'émission (62),
- une première électrode (10, 12),
- un diélectrique plan (20) qui fait écran entre la première électrode (10, 12) et la première chambre de réacteur et qui est agencé près de ou sur cette première électrode (ou vice versa),
- une deuxième électrode (32) qui est agencée près du diélectrique, qui se trouve donc du côté tourné vers la première chambre de réacteur et donc vers le gaz, du diélectrique, qui est conçue comme un produit plan ajouré et qui peut être branchée à la première électrode (10, 12).

2. Dispositif selon la revendication 1, **caractérisé en ce que** l'électrode (10) est un produit plan massif.

3. Dispositif selon la revendication 1 ou 2, dans lequel la chambre de réacteur est aussi limitée par une paroi (39) qui est à l'opposé du diélectrique et qui peut être branchée conjointement à la deuxième électrode.

4. Dispositif selon la revendication 3, dans lequel un matériau de catalyseur (71, 79) est appliqué sur la paroi (39) et/ou sur la deuxième électrode (32) et/ou dans lequel la paroi (39) est en un matériau de catalyseur.

5. Dispositif selon la revendication 1, comprenant
- une première et une deuxième chambres de réacteur (60, 66) qui peuvent être traversées dans le sens de la longueur par un gaz à traiter allant d'un côté d'admission (61) à un côté d'émission (62),
- une première électrode (12) qui est conçue comme un produit plan ajouré et qui est agencée dans la deuxième chambre de réacteur (66),
- une deuxième électrode ajourée (32) qui est agencée dans la première chambre de réacteur (60),
- un diélectrique plan (20) qui sépare les deux chambres d'électrodes l'une de l'autre.

6. Dispositif selon la revendication 5, dans lequel les deux chambres de réacteur (66, 60) comportent respectivement des parois (19, 39) à l'opposé du diélectrique et sont limitées par celles-ci, un matériau de catalyseur (71, 79) se trouvant sur l'une de ces parois ou sur ces deux parois et/ou sur l'une des électrodes ou sur les deux électrodes (12, 32) ou dans lequel l'une ou les deux parois est/sont en un matériau de catalyseur.

7. Dispositif selon la revendication 6, dans lequel les parois (19, 39) sont recouvertes de matériau de catalyseur (79).

8. Dispositif selon la revendication 1, comprenant au moins deux chambres de réacteur qui peuvent être traversées dans le sens de la longueur par un gaz à traiter allant d'un côté d'admission (61) à un côté d'émission (62) et qui sont séparées à chaque fois les unes des autres par des diélectriques (20, 20', 20", ...), chaque chambre de réacteur dans la série comportant de façon alternée une première (12) ou une deuxième (32) électrode conçue comme un produit plan ajouré et la distance entre deux diélectriques (20, 20') étant choisie de telle sorte que des parties de structure de la première ou de la deuxième électrode se trouvent à chaque fois aussi bien près du premier diélectrique (20) que près du deuxième diélectrique (20').

9. Dispositif selon la revendication 8, dans lequel du matériau de catalyseur (71, 73) est agencé sur les surfaces d'électrodes (12, 32) ou dans des espaces libres des électrodes.

10. Dispositif selon l'une des revendications 5 à 9, dans lequel les électrodes sont conçues à partir de barres ou de fils et/ou en forme de grille ou de réseau ou comme un tissu ou un treillis.

11. Dispositif selon l'une des revendications 5 à 10, dans lequel le matériau de catalyseur (71, 73) est appliqué sur la surface d'électrode et/ou est inséré comme couche intermédiaire dans la structure d'électrode.

12. Procédé pour le traitement ultérieur d'effluents gazeux, dans lequel on soumet le gaz à une décharge de barrière électrique et dans lequel le gaz traverse ce faisant dans une seule et même chambre de réacteur d'abord une zone d'excitation (63) et peu après une zone de réaction subséquente (68), **caractérisé en ce que**
- le gaz traverse au moins une première chambre de réacteur dans le sens de la longueur en allant d'un côté d'admission (61) à un côté d'émission (62),
- on prévoit une première électrode (10, 12),
- on prévoit un diélectrique plan (20) qui fait écran entre la première électrode (10, 12) et la première chambre de réacteur et qui est agencé près de ou sur cette première électrode (ou vice versa), et
- on dispose une deuxième électrode (32) près du diélectrique, se trouvant donc du côté tourné vers la première chambre de réacteur et donc vers le gaz, du diélectrique, qui est conçue comme un produit plan ajouré et qui peut être branchée à la première électrode (10, 12).

13. Procédé selon la revendication 12, dans lequel le gaz dans la zone de réaction subséquente passe par des réactions consécutives catalysées par du matériau de catalyseur.

14. Procédé selon la revendication 12 ou 13, dans lequel le gaz traverse après la zone de réaction subséquente (68) une zone de réaction consécutive (69) dans laquelle il est soumis à des réactions chimiques classiques provoquées par du matériau de catalyseur, la zone de réaction consécutive (69) étant alors agencée, vue dans le sens d'écoulement principal du gaz (61, 62), à côté de la zone de réaction subséquente (68).
